(19) Europäisches Patentamt
European Patent Office
Office européen des brevets

(11) EP 3 243 869 B1

(12) EUROPEAN PATENT SPECIFICATION

(45) Date of publication and mention of the grant of the patent:
**27.07.2022 Bulletin 2022/30**

(21) Application number: **16169290.0**

(22) Date of filing: **12.05.2016**

(51) International Patent Classification (IPC):
***C08K 3/22*** *(2006.01)* ***C08K 5/07*** *(2006.01)*

(52) Cooperative Patent Classification (CPC):
(C-Sets available)
**C08K 5/07; C08K 3/22; C08K 5/098;** C08K 5/005; C08K 2003/2206; C08K 2003/2224; C08K 2003/2296 (Cont.)

# (54) COMPOSITIONS AND PRODUCTS FOR STABILIZING HALOGEN-CONTAINING POLYMERS

ZUSAMMENSETZUNGEN UND PRODUKTE ZUR STABILISIERUNG VON HALOGENHALTIGEN POLYMEREN

COMPOSITIONS ET PRODUITS POUR STABILISER DES POLYMÈRES HALOGÉNÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.11.2017 Bulletin 2017/46**

(73) Proprietor: **Reagens S.p.A.**
**40016 S. Giorgio Di Piano (IT)**

(72) Inventors:
- **GARDI, Stefano**
  **40122 BOLOGNA (IT)**
- **SARTI, Gianfranco**
  **40018 SAN PIETRO IN CASALE (IT)**
- **BARBIERI, Marco**
  **44123 FERRARA (IT)**
- **BERNA, Mario**
  **40137 BOLOGNA (IT)**

(74) Representative: **Cattaneo, Elisabetta et al**
**Notarbartolo & Gervasi S.p.A.**
**Viale Achille Papa, 30**
**20149 Milano (IT)**

(56) References cited:
**US-A- 4 221 687** **US-A- 5 010 123**
**US-A1- 2008 132 616** **US-A1- 2015 038 626**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/22, C08L 27/06;**
**C08K 5/07, C08L 27/06;**
**C08K 5/098, C08L 27/06**

## Description

### FIELD OF THE INVENTION

The invention relates to a composition/product for stabilizing halogen-containing polymers, in particular polyvinyl chloride in rigid, semirigid and plasticized formulations.

### STATE OF THE ART

It is known to process halogen-containing polymers at high temperatures to produce final articles of interest. The temperatures involved, however, can cause a dehydrochlorination reaction giving rise to polymer degradation, resulting in a change in the colour and a loss of the physical and chemical properties of the polymer.

It is therefore of fundamental importance to stabilize halogen-containing polymers such as PVC. For this purpose, are used product mixtures containing primary, secondary and co-stabilizers as described in H. Zweifel, Plastics Additives Handbook $5^{th}$ Ed., Hanser, 2000.

Acetylacetonate metal salts are widely known to provide good initial color to PVC upon processing, but cause "red waters" phenomenon in extrusion processes where venting is applied by means of liquid ring vacuum pumps made of low carbon steel. This red coloration of the water is due to the complexation of iron ions by acetylacetone, coming from the degradation of acetylacetonate metal salts.

The resulting iron-acetylacetonates increase the chemical oxygen demand (COD) of the waters causing environmental concerns.

1,3-diketones, such as dibenzoylmethane (DBM) or stearoyl benzoyl methane (SBM), are possible alternatives to acetylacetonate metal salts that do not trigger the "red waters" phenomenon. However, some 1,3-diketones (e.g. DBM) cause the "red deposits" phenomenon on the die in extrusion processes where the die is made of low carbon steel. Other 1,3-diketones (e.g. SBM) are not effective enough in PVC stabilization.

Zinc oxide is used (see US 4221687) in combination with 1,3-diketones, but its use is restricted: according to the present Regulation EC 1272/2008, a loading higher than 0.25% w/w provides dangerous mixtures that are harmful to aquatic life with long lasting effects. Moreover, its use in high loading lead to an undesirable reduced long term thermal stability, that is evident as a sudden darkening of the article upon processing.

Calcium and magnesium hydroxides are also used in combination with 1,3-diketones (see, e.g., EP 1613696), but their use is limited as impart a reddish color to the final articles (measured in terms of a too high a* value in the colorimetric space of the 1976 CIELAB system), thus negatively affecting their appearance.

1,3-diketones neutral salts, such as zinc dibenzoylmethane, are a possible alternative that does not trigger "red waters" phenomenon and limits the "red deposits" one. However, even these types of stabilizers are not able to avoid completely the "red deposits" phenomenon. Moreover, their dispersibility in the polymer matrix is difficult, thus causing "pitting" on the surface of the final extruded articles.

The aim of the invention is to provide an efficient, well dispersible, safer stabilizer for halogen containing polymers, which triggers neither "red waters" nor "red deposits" phenomena upon extrusion.

### SUMMARY OF THE INVENTION

The inventors have now surprisingly found that a combination of a 1,3-diketone and a metal compound can replace acetylacetonates and 1,3-diketones, providing a similar or better stabilization of halogen containing polymers, while avoiding "red waters" and "red deposits" upon extrusion of said polymers.

In a first aspect thereof, the invention is about a composition for stabilizing halogen-containing polymers, comprising a component A being a compound 1,3-diketone of formula (I)

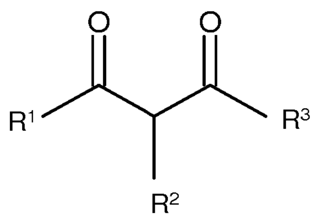

(I)

wherein:

$R^1$ and $R^3$, independently from one another, are ($C_2$-$C_{22}$) alkyl; hydroxy($C_5$-$C_{10}$) alkyl; ($C_3$-$C_7$)alkenyl; phenyl; phenyl substituted with a substituent selected from OH, ($C_1$-$C_4$)alkyl or halogen($C_1$-$C_4$)alkyl; phenyl($C_7$-$C_{10}$)alkyl; ($C_5$-$C_{12}$)cycloalkyl; ($C_5$-$C_{12}$)cycloalkyl substituted with ($C_1$-$C_4$)alkyl;
$R^2$ is selected from the group consisting of hydrogen, ($C_1$-$C_8$)alkyl, ($C_3$-$C_7$)alkenyl, ($C_2$-$C_{12}$)alkylphenyl, alkyl($C_7$-$C_{12}$)phenyl and ($C_7$-$C_{10}$)alkyl,
or its salt of a metal M selected from Zn, Mg and Ca,
and
a component B being a compound of metal M selected from the group consisting of ZnO, $Mg(OH)_2$ and $Ca(OH)_2$, wherein the compound 1,3-diketone of formula (I) is selected from the group consisting of stearoylbenzoylmethane, dehydroacetic acid (3-acetyl-2-hydroxy-6-methyl-4H-pyran-4-one) and dibenzoylmethane (DBM), and wherein the molar ratio between M and 1,3-diketone compound is in the range from 1.1:2 to 5.0:2.

In a first embodiment the invention hence concerns a composition comprising a compound 1,3-diketone of formula (I) as component A and a compound of metal M selected from the group consisting of ZnO, $Mg(OH)_2$ and $Ca(OH)_2$ as component B, wherein the molar ratio between M and 1,3-diketone compound is in the range from 1.1:2to 5.0:2.

In a second embodiment the invention hence concerns a composition comprising a salt of a metal M selected from Zn, Mg and Ca of a compound 1,3-diketone of formula (I) as component A and a compound of metal M selected from the group consisting of ZnO, $Mg(OH)_2$ and $Ca(OH)_2$ as component B, wherein the molar ratio between M and 1,3-diketone compound is in the range from 1.1:2 to 5.0:2. In the second embodiment of the invention the composition provides a more effective reduction of "red deposits".

In both the embodiments of the invention, preferably in the second and preferred embodiment of the invention, the composition, together with components A and B, comprises a component C, being an ester and/or partial ester of saturated, straight-chain ($C_{12}$-$C_{34}$)carboxylic acids or an ($C_8$-$C_{22}$)alcohol, and/or a component D, being a zinc salt of saturated, straight-chain ($C_8$-$C_{22}$)carboxylic acids.

The composition according to this preferred embodiment has optimal dispersibility in the halogen-containing polymer matrix.

In another aspect the invention relates to a process for preparing the composition of the second embodiment of the invention which comprises the steps of:

a) loading and melting the 1,3-diketone compound of formula (I);
b) adding component B to melt of step a);
d) heating the product of step b) to a temperature in the range from 70 to100 °C, thus removing water from the product.

Preferably and advantageously, components C and D are added together to component B in step b) in order to prepare the stabilizing composition of the second embodiment, thus giving the most preferred stabilizing composition of the invention. Without being bound to any theory, the inventors have in fact observed that reacting components, the 1,3-diketone compound of formula (I) and component B at a temperature in the range from 70°C to 100°C in the presence of components C and D allows to obtain the stabilizing composition of the second embodiment in the form of a stabilizing product. Such a product has an improved dispersion in the final resin when added, providing good surface quality of the extruded article.

The composition of the second embodiment of the invention obtained with the addition in step b) of also components C and D, is a new stabilizing product having a defined viscosity at 120°C, i.e. from 3 to 100 mPas, preferably from 5 to 50 mPas and, more preferably of 7 mPas. The viscosity of the stabilizing product was measured at 120°C with a viscosimeter for dynamic viscosity HAAKE RS50 Rheostress equipped with a rotor of 55 mm high and 41 mm diameter and at a speed is about 400 rpm.

In its last aspect, the invention is about a resin in rigid, semi-rigid or plasticized formulation, comprising a halogen-containing polymer and a stabilizing composition or a stabilizing product as described above.

## DETAILED DESCRIPTION OF THE INVENTION

As used in the present invention:

- the term "halogen-containing polymer" means polyvinyl halides, including vinyl chloride polymers; more preferably the halogen-containing polymer is polyvinyl chloride (PVC) or chlorinated polyvinyl chloride (C-PVC);
- the term "resin" means a final composition obtained by addition of a composition or product of the invention (and possibly other additives) to a halogen-containing polymer;

- the term "halogenated resin in a rigid formulation" means a halogen-containing polymer formulation substantially free of plasticizer compounds; and
- the term "halogenated resin in a plasticized formulation" means a halogen-containing polymer formulation with added plasticizer compounds.

The invention concerns hence a composition for stabilizing halogen-containing polymers, comprising a component A being a compound 1,3-diketone of formula (I)

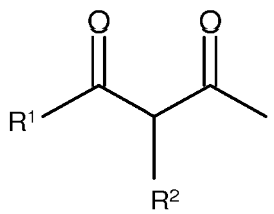

(I)

wherein:

$R^1$ and $R^3$, independently from one another, are ($C_2$-$C_{22}$) alkyl; hydroxy($C_5$-$C_{10}$) alkyl; ($C_3$-$C_7$)alkenyl; phenyl; phenyl substituted with a substituent selected from OH, ($C_1$-$C_4$)alkyl or halogen($C_1$-$C_4$)alkyl; phenyl($C_7$-$C_{10}$)alkyl; ($C_5$-$C_{12}$)cycloalkyl; ($C_5$-$C_{12}$)cycloalkyl substituted with ($C_1$-$C_4$)alkyl;
$R^2$ is selected from the group consisting of hydrogen, ($C_1$-$C_8$)alkyl, ($C_3$-$C_7$)alkenyl, ($C_2$-$C_{12}$)alkylphenyl, alkyl($C_7$-$C_{12}$)phenyl and ($C_7$-$C_{10}$)alkyl,
or its salt of a metal M selected from Zn, Mg and Ca,
and
a component B being a compound of metal M selected from the group consisting of ZnO, $Mg(OH)_2$and $Ca(OH)_2$,
wherein the compound 1,3-diketone of formula (I) is selected from the group consisting of stearoylbenzoylmethane, dehydroacetic acid (3-acetyl-2-hydroxy-6-methyl-4H-pyran-4-one) and dibenzoylmethane (DBM), and
wherein the molar ratio between M and 1,3-diketone compound is between 1.1:2 and 5.0:2.

In a first embodiment the invention hence concerns a composition comprising a compound 1,3-diketone of formula (I) as component A and a compound of metal M selected from the group consisting of ZnO, $Mg(OH)_2$ and $Ca(OH)_2$ as component B, wherein the molar ratio between M and 1,3-diketone compound is in the range from 1.1:2to 5.0:2.

In a second embodiment the invention hence concerns a composition comprising a salt of a metal M selected from Zn, Mg and Ca of a compound 1,3-diketone of formula (I) as component A and a compound of metal M selected from the group consisting of ZnO, $Mg(OH)_2$ and $Ca(OH)_2$ as component B, wherein the molar ratio between M and 1,3-diketone compound is in the range from 1.1:2 to 5.0:2. The preferred aspects for the first embodiment are the same for the second embodiment of the invention.

In the stabilizing composition of the invention the molar ratio between M and 1,3-diketone compound is in the range from 1.1:2 to 5.0:2.

The molar ratio between M and 1,3-diketone compound is preferably in the range from 1.1:2 to 1.5:2, and more preferably 1.3:2.

The preferred compound 1,3-diketone of formula (I) present in the composition of the present invention is dibenzoylmethane (DBM).

The composition of the invention may optionally further comprise one or both components C and D, which improve the dispersion into the halogen-comprising polymer of the stabilizing composition.

Optional component C is an ester and/or partial ester of saturated, straight-chain C12-C34 carboxylic acids or an ($C_8$-$C_{22}$)alcohol; the preferred component C is ethyleneglycol distearate.

Optional component D is a zinc salt of saturated, straight-chain $C_8$-$C_{22}$ carboxylic acids; the preferred component D is zinc stearate.

The presence of both components C and D in the second embodiment of the invention, specifically in step b) in particular esters of $C_{16}$-$C_{18}$ fatty acids (C), more preferably esters of $C_{16}$-$C_{18}$ fatty acids with ethylene glycol, and zinc stearate (D) improves the dispersion, when the composition is used in the final resin.

In another aspect the invention relates to a process for preparing the composition of the second embodiment of the invention which comprises the steps of:

a) loading and melting the 1,3-diketone compound of formula (I);
b) adding component B to melt of step a);
d) heating the product of step b) to a temperature in the range from 70 to100 °C, thus removing water from the product.

Preferably, the composition of the second embodiment can be prepared according to the following method:

a) the 1,3-diketone compound of formula (I) is first loaded in a reactor and melted;
b) component B is then slowly added to the 1,3-diketone compound ;
c) the components are allowed to homogenize for a period between 5 minutes and 1 hour;
d) the two components are then heated to a temperature between about 70 and 100 °C, for a time between 0.5 and 2 hours;
e) water generated during the reaction is removed under vacuum, heating the mixture to a temperature of about 100 °C;
f) the resulting composition is then allowed to cool to room temperature, homogenized for a time between 15 minutes and 1 hour, and ground.

More preferably, components C and D are added together to component B in step b) in order to prepare the stabilizing composition of the second embodiment, thus giving the most preferred stabilizing composition of the invention. Without being bound to any theory, the inventors have in fact observed that reacting components, the 1,3-diketone compound of formula (I) and component B at a temperature in the range from 70°C to 100°C in the presence of components C and D allows to obtain the stabilizing composition of the second embodiment in the form of a stabilizing product. Such a product has an improved dispersion in the final resin when added, providing good surface quality of the extruded article. The presence of both components C and D in the process for preparing the second embodiment of the invention, specifically in step b) in particular esters of $C_{16}$-$C_{18}$ fatty acids (C), more preferably esters of $C_{16}$-$C_{18}$ fatty acids with ethylene glycol, and zinc stearate (D) further improves the dispersion.

The composition of the second embodiment of the invention obtained with the addition in step b) of also components C and D, is a new stabilizing product having a defined viscosity at 120°C, i.e. from 3 to 100 mPas, preferably from 5 to 50 mPas and, more preferably of 7 mPas. The viscosity of the stabilizing product was measured at 120°C with a viscosimeter for dynamic viscosity is: HAAKE RS50 Rheostress equipped with a rotor of 55 mm high and 41 mm diameter and at a speed is about 400 rpm. The composition of the second embodiment with also components C and D, added during the preparation of the second embodiment of the invention, is the stabilizing product of the invention, that allows the production of pellets free from inhalable powder.

In another aspect, the invention relates to a halogenated resin in rigid formulation comprising a halogen-containing polymer and the stabilizing composition or the stabilizing product according to the invention.

In a still further aspect, the invention relates to a halogenated resin in semirigid, plasticized formulation comprising a halogen-containing polymer, at least one plasticizer substance and the stabilizing composition or the stabilizing product according to the invention.

In a preferred embodiment, the halogen-containing polymer is polyvinyl chloride (PVC) or chlorinated polyvinyl chloride (C-PVC).

Component A is from 0.008 to 8 parts by weight, preferably from 0.08 to 0.4 per 100 parts by weight per 100 parts of polymer.

Component B is from 0.002 to 2 parts by weight, preferably from 0.02 to 0.1 per 100 parts by weight per 100 parts of polymer.

Component C from 0.00 to 25 parts by weight, preferably from 0.25 to 1.2 per 100 parts by weight per 100 parts of polymer.

Component D from 0.00 to 9 parts by weight, preferably from 0.09 to 0.5 per 100 parts by weight per 100 parts of polymer.

The final resin can also comprise one or more conventional stabilizing and co-stabilizing excipient agents selected from the group consisting of metal soaps, organotin compounds, perchlorates and perfluoroalkanesulphonates, sodium adipate, antioxidants, alkanolamines, zeolites and hydrotalcites, polyols, organic phosphites, $\beta$-aminocrotonic acid esters and organic co-stabilizers such as dihydropyridines, polydihydropyridines and uracil derivatives.

These stabilizing and co-stabilizing excipients can be added either to the composition/product of the invention or, preferably, are added afterwards to the halogen-containing polymer in the final resin in rigid, semirigid or plasticized formulation.

The stabilizing excipient is preferably contained in the stabilization composition of the invention in an amount between 0.05 and 5 parts by weight per 100 parts of halogen-containing polymer.

The following can be cited as non-limiting examples of stabilizing excipients:

Metal soaps

All metal soaps known for use as polyvinyl chloride (PVC) stabilizers are suitable for the invention. These are organic sodium, lithium, potassium, calcium, magnesium and aluminium salts of saturated $C_2$-$C_{22}$ aliphatic carboxylates, unsaturated $C_2$-$C_{22}$ aliphatic carboxylates, saturated $C_2$-$C_{22}$ aliphatic carboxylates substituted with at least one OH group, or whose chain is interrupted by at least one oxygen atom (oxyacids), cyclic or bicyclic carboxylates containing from 5 to 22 carbon atoms, phenylcarboxylates, unsubstituted or substituted with at least one OH group and/or substituted with $C_1$-$C_{16}$ alkyl, naphthylcarboxylates, unsubstituted or substituted with at least one OH group and/or substituted with $C_1$-$C_{16}$ alkyl, phenyl- ($C_1$-$C_{16}$)alkylcarboxylates, naphthyl-($C_1$-$C_{16}$)alkylcarboxylates, or phenolates, unsubstituted or substituted with $C_1$-$C_{12}$ alkyl.

Among these, the following can be cited: metal salts of monovalent carboxylic acids such as acetic acid, propionic acid, butyric acid, valeric acid, hexanoic acid, n-heptanoic acid, octanoic acid, neodecanoic acid, 2-ethylhexanoic acid, nonanoic acid, decanoic acid, undecanoic acid, dodecanoic acid, tridecanoic acid, myristic acid, palmitic acid, lauric acid, isostearic acid, stearic acid, 12-hydroxystearic acid, 9,10-dihydroxystearic acid, oleic acid, 3,6-dioxaheptanoic acid, 3,6,9-trioxadecanoic acid, behenic acid, benzoic acid, p-tert-butylbenzoic acid, dimethylhydroxybenzoic acid, 3,5-di-tert-butyl4-hydroxybenzoic acid, toluic (methylbenzoic) acid, dimethylbenzoic acid, ethylbenzoic acid, n-propylbenzoic acid, salicylic acid, p-tert-octylsalicylic acid and sorbic acid; metal salts of bivalent or monoesterified carboxylic acids such as oxalic acid, malonic acid, succinic acid, glutaric acid, adipic acid, fumaric acid, pentane-1,5-dicarboxylic acid, hexane-1,6-dicarboxylic acid, heptane-1,7-dicarboxylic acid, octane-1,8-dicarboxylic acid, 3,6,9-trioxadecane-1,10-dicarboxylic acid, lactic acid, malonic acid, maleic acid, tartaric acid, oxalic acid, salicylic acid, phthalic acid, isophthalic acid, terephthalic acid, hydroxyphthalic acid, and the diesters or triesters of tri- or tetra-valent carboxylic acids such as hemimellitic acid, trimellitic acid, pyromellitic acid, citric acid, and metal salts of mono- or di-esterified phosphoric acid or monoesterified phosphorous acid as described in JP 3275570; and colophonic acids (rosin acids such as abietic acid), and superbasic carboxylates.

Metal soaps preferred in the present invention are metal carboxylates of a carboxylic acid containing from 2 to 25 carbon atoms, being typically, acetates, benzoates, or alkanoates, and preferably Cs-alkanoates, stearates, oleates, laurates, palmitates, behenates, versatates, hydroxystearates, dihydroxystearates, p-tert-butylbenzoates, and 2-ethylhexanoates.

According to the invention, a mixture of carboxylates of different structure can also be used as metal soaps. Preference is given to the compositions as aforedescribed containing sodium, and/or calcium soaps.

Li, K, Mg, Ca, Na salts of the aforestated fatty acids containing from 2 to 25 carbon atoms are preferably added to the resin or to the composition/product of the invention.

Organotin compounds

Organotin compounds are a particularly well known and extensively used class of metal-containing thermal stabilizers for halogenated vinyl polymers. This class comprises compounds containing one or more tetravalent tin atoms, each of which has at least one direct tin-carbon bond. A preferred class of tin-containing thermal stabilizers presents one or more tetravalent tin atoms, each of which has at least one direct tin-oxygen or tin-sulphur bond, i.e., containing the groups:

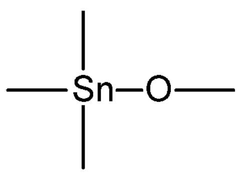 , 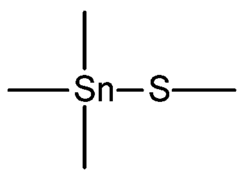 or 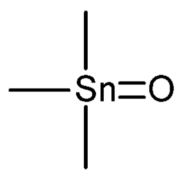

The organotin compounds preferred in the invention comprise those containing one or more tetravalent tin atoms having at least one direct tin-carbon bond and in which the remaining valencies are satisfied by bonds with oxygen or sulphur, as in the case of a residue resulting from the removal of a hydrogen bound to the sulphur of a mercaptan, mercaptoalcohol, mercaptoacid or mercaptoalcohol ester or as in the case of a residue resulting from the removal of a hydrogen bound to the oxygen of a carboxylic acid or alcohol or hydrohalogen acid, on condition that at least one valency is satisfied by a bond with oxygen or sulphur or a mixture of the two. Examples of compounds of this type are: alkyl tin mercaptides, the product of reacting an organotin halide with a sulphide of an alkali metal and mercaptide, mercaptoacid ester, mercaptoalcohol, mercaptoalcohol ester or mixtures thereof. Another class of tin-containing stabilizers that can be used in the present invention is the group of non-sulphur-containing compounds in which tin is bound to oxygen. This group includes, by way of non-limiting example, dibutyltin maleate, dibutyltin di(stearyl maleate), dioctyltin maleate,

organotin carboxylates or organotin alkoxides.

The stabilizer composition of the present invention can comprise organotin compounds preferably in an amount within the range from 0.1 to 4 parts by weight, more preferably from 0.15 to 2.0 parts by weight, per 100 parts by weight of polymer.

Non-metal stabilizers

Among metal-free stabilizers esters of β-aminocrotonic acid can be cited. Considered suitable among these compounds are for example β-aminocrotonic acid stearyl ester, 1,4-butanediol-di(β-aminocrotonic acid) ester, thio-diethanol-β-aminocrotonic acid ester.

Perchlorates and perfluoroalkanesulphonates

The polymer stabilizing composition can also comprise a compound selected from the group consisting of $M(ClO_4)_k$ and $M(CF_3SO_3)_n$ in which M is selected from the group consisting of $H^+$, $Li^+$, $Na^+$, $K^+$, $Mg^{2+}$, $Ca^{2+}$, $Ba^{2+}$, $Zn^{2+}$, $Al^{3+}$ and $NH_4^+$, and k and n are 1, 2 or 3 depending on the valency of M.

M is preferably selected from the group consisting of $Li^+$, $Na^+$, $K^+$, $Mg^{2+}$, $Ca^{2+}$ and $Zn^{2+}$, more preferably M is selected from the group consisting of $Na^+$, $K^+$ and $Ca^{2+}$, and still more preferably it is sodium.

In case of use of a compound of formula $M(CF_3SO_3)_n$, this is preferably trifluoromethanesulphonic acid or a sodium salt thereof, more preferably it being sodium trifluoromethanesulphonate.

Preferred for the purposes of the invention is the use of perchloric acid or perchlorate salts. These can be used in various forms, for example preparations such as salts or aqueous or organic solutions, supported on various materials such as PVC, calcium silicate, zeolites or hydrotalcites or bound to a hydrotalcite by chemical reaction.

Furthermore, the preferred perchlorates of the invention are complexes of metal perchlorate, more preferably sodium perchlorate, with triethylene glycol, butyldiglycol or polyethylene glycol.

The composition of the invention can also comprise other additives/excipients able to behave as co-stabilizers, selected from the group consisting of antioxidants, organic co-stabilizers (β-diketones and dihydropyridines or polydihydropyridines, uracil derivatives), alkanolamines, zeolites and hydrotalcites, polyols, hydrates and oxides of alkali and alkaline-earth metals and organic phosphites.

Antioxidants

The organic antioxidants used in the present invention are selected from those already known as additives for plastic materials. For the purposes of the invention, preferred are one or more antioxidants selected from the group consisting of alkylidene-bisphenols, esters of β-(3,5-di-tert-butyl-4-hydroxyphenyl)propionic acid with mono- or poly-alcohols, esters of β-(5-tert-butyl-4-hydroxy-3-methylphenyl)propionic acid with mono- or poly-alcohols, esters of β-(3,5-dicyclohexyl-4-hydroxyphenyl)propionic acid with mono- or poly-alcohols. Particularly preferred according to the invention are 2,2'-methylene-bis(6-tert-butyl-4-methylphenol), commercially available as Lowinox® 22 M46 produced by Chemtura, and esters of β-(3,5-di-tert-butyl-4-hydroxyphenyl)propionic acid with octadecanol and with pentaerythritol, respectively Arenox® A76 and Arenox® A10, produced by Reagens, and bisphenol A.

The aforedescribed antioxidants, if present, are preferably included in an amount within the range from 0.01 to 1.0 parts by weight, more preferably from 0.1 to 0.5 parts by weight, per 100 parts by weight of polymer.

Organic co-stabilizers

The invention also provides for the optional presence of organic co-stabilizers in the composition of the invention to further increase the effectiveness of the stabilizing composition. The organic co-stabilizers optionally present in the stabilizing composition of the invention are preferably one or more compounds selected from dihydropyridines, polydihydropyridines, and uracil derivatives. *Dihydropyridines (DHP).* Preferred monomeric dihydropyridine derivatives for use in the present invention include carboxylic acids esters of general formula (II):

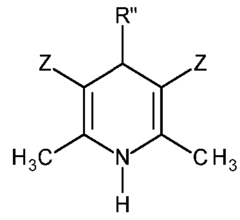

(II)

wherein Z is $CO_2C_2H_5$ or $CO_2(n\text{-}C_{12}H_{25})$ and R" is hydrogen, $C_1$-$C_{18}$ alkyl, $C_2$-$C_{18}$ alkoxycarbonyl or $C_6$-$C_{10}$ aryl.

Particularly preferred are 3-bisdodecyloxycarbonyl-2,6-dimethyl-1,4-dihydropyridine, commercially available as Stavinor® D507 (PMC Group).

*Uracil derivatives.* The uracil derivatives advantageously present in the composition of the invention are described by general formula (III):

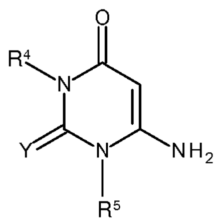

(III)

wherein:

R4 and R5 are, independently of one another, hydrogen, $C_1$-$C_{12}$ alkyl, $C_3$-$C_6$ alkenyl, $C_5$-$C_8$ cycloalkyl optionally substituted with 1 to 3 $C_1$-$C_4$ alkyl, $C_1$-$C_4$ alkoxy, $C_5$-$C_8$ cycloalkyl or hydroxyl or with chlorine atoms, or $C_7$-$C_9$ phenylalkyl optionally substituted on the phenol ring with 1 to 3 $C_1$-$C_4$ alkyl, $C_1$-$C_4$ alkoxy, $C_5$-$C_8$ cycloalkyl or hydroxyl or with chlorine atoms; Y can be oxygen or sulphur.

Examples of $C_1$-$C_4$ alkyl are methyl, ethyl, n-propyl, isopropyl, n-, iso-, sec-, or tert-butyl.

Examples of $C_1$-$C_{12}$ alkyl are, in addition to the aforementioned radicals, pentyl, hexyl, heptyl, octyl, 2-ethylhexyl, isooctyl, nonyl, decyl, undecyl, dodecyl. Examples of $C_1$-$C_4$ alkoxy are methoxy, ethoxy, propoxy, isopropoxy, butoxy, isobutoxy.

Examples of $C_5$-$C_8$ cycloalkyl are cyclopentyl, cyclohexyl, cycloheptyl, cyclooctyl. Examples of $C_7$-$C_9$ phenylalkyl are benzoyl, 1- or 2- phenylethyl, 3-phenylpropyl, a,a-dimethylbenzyl, or 2-phenylisopropyl, preferably benzyl. If the cycloalkyl or phenyl groups of the phenylalkyl radical are substituted, then they are substituted with one or two substituents, preferably selected from chlorine, hydroxyl, methyl or methoxy.

Examples of $C_3$-$C_6$ alkenyl are allyl, methallyl, 1-butenyl, or 1-hexanyl, preferably allyl.

Preferred are the compounds of the aforestated formula, in which $R^4$ and $R^5$ are, each independently of the other, $C_1$-$C_4$ alkyl and hydrogen; in particular, the compound in which $R^4$ and $R^5$ are methyl is preferred.

Among the uracil derivatives there can also be optionally present in the composition of the invention oligomeric or polymeric derivatives of formula (III'):

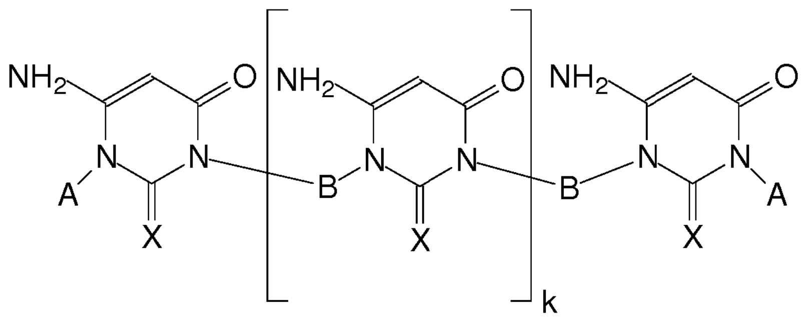

(III')

wherein:

A is n-octyl, n-octadecyl, oleyl, phenyl, cyclohexyl or 3-hydroxyphenyl and
B is hexamethylene, 3-methylene-3,5,5,trimethylcyclohexan-1-yl, 4,4'-methylene-bis-cyclohexyl, 4,4'-methylene -bis-phenyl,
X is oxygen, or
if A is phenyl and B is hexamethylene, then X is sulphur;
k varies from 0 to 17, preferably from 0 to 2. The oligomer derivatives described above are preferred in the invention.

The aforedescribed organic co-stabilizers can be present preferably in an amount within the range from 0.01 to 1.0 parts by weight, in particular from 0.1 to 0.5 parts by weight, per 100 parts by weight of polymer.

Alkanolamines

Alkanolamines, advantageously present in the composition of the invention, are compounds of general formula (IV):

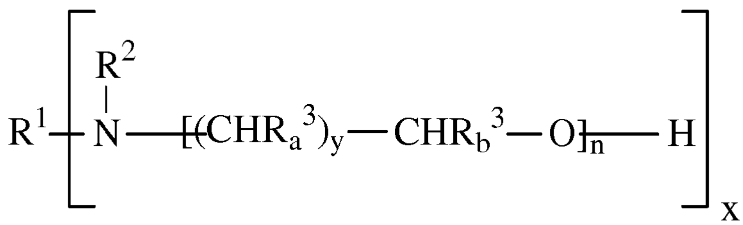

(IV)

wherein

x = 1, 2, 3;
y = 1, 2, 3, 4, 5 or 6;
n is from 1 to 10
$R^1$ and $R^2$ are independently H, $C_1$-$C_{22}$ alkyl,

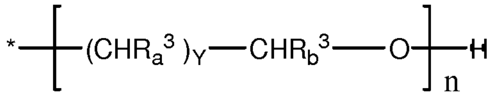 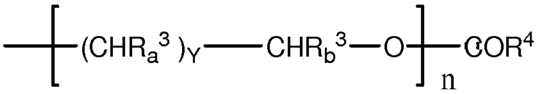

$C_2$-$C_{20}$ alkenyl, $C_2$-$C_{18}$ acyl, $C_4$-$C_8$ cycloalkyl, which can also be hydroxyl-substituted in position β, $C_6$-$C_{10}$ aryl, $C_7$-$C_{10}$ arylalkyl or alkylaryl, or
if x = 1, then $R^1$ and $R^2$ can be additionally combined with nitrogen to form a cyclo of 4-10 carbon atoms and optionally up to 2 heteroatoms, or
if x = 2, then $R^1$ can additionally be $C_2$-$C_{18}$ alkylene, which can be hydroxyl-substituted at both carbon atoms in β

and/or can be interrupted by one or more NR groups;

$R_a^3$, $R_b^3$ are independently $C_1$-$C_{22}$ alkyl, $C_2$-$C_6$ alkenyl, $C_6$-$C_{10}$ aryl, H or $CH_2$-X-$R^5$, where X is oxygen, sulphur, -O-CO- or CO-O-;

$R^4$ is $C_1$-$C_{18}$ alkyl, alkenyl or phenyl and

$R^5$ is H, $C_1$-$C_{22}$ alkyl, $C_2$-$C_{22}$ alkenyl, or $C_6$-$C_{10}$ aryl.

Preferred trialkanolamines of general formula (IV) are those in which $R_a^3$, $R_b^3$ are, each independently of the other, H or methyl, and y = 1.

Other alkanolamines are diamines of general formula (V):

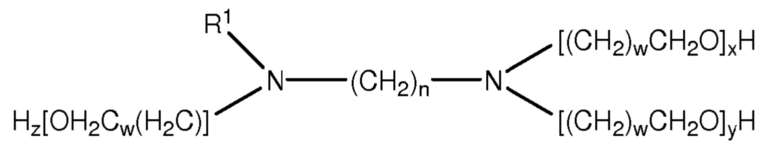

(V)

wherein:

n is an integer from 3 to 4, x, y, z are independently of each other an integer from 1 to 20, w is an integer from 1 to 2, $R^1$ is a $C_8$-$C_{20}$ hydrocarbon residue of a compound selected from the group consisting of tallow, cottonseed oil, soya bean oil, and coconut oil. The diamine (V) of the invention is advantageously N,N',N'-tris(3-hydroxypropyl)-N-coco-alkyl-1,3-propanediamine, N,N,N'-(2-hydroxyethyl)-N'-$C_{12-18}$-alkyl-1,3-propanediamine, N,N',N'-tris-(2-hydroxyethyl)-N-tallow-alkyl-1,3-propanediamine, N,N',N'-polyoxyethylene(15)-N-tallow-alkyl-1,3-propanediamine, or N,N',N'-tris(2-hydroxyethyl)-N-coco-alkyl-1,3-propanediamine.

Examples of preferred alkanolamines according to the general formula are: tri(hydroxyethyl)amine, tri(hydroxypropyl)amine.

The aforedescribed alkanolamines can be present preferably in an amount within the range from 0.01 to 1.0 parts by weight, in particular from 0.1 to 0.5 parts by weight, per 100 parts by weight of polymer and are preferably used in combination with perchlorates and perfluoroalkanesulphonates.

<u>Hydrotalcites</u>

The hydrotalcites optionally present in the compositions of the invention can be described by the following general formula:

$$[M^{2+}_{1-x}M^{3+}_{x}(OH)_2]^{x+}[A^{n-}_{x/n}mH2O]^{x-}$$

wherein $M^{2+}$ represents at least one bivalent metal cation of the group consisting of Mg, Zn, Ni, Ca; $M^{3+}$ represents at least one trivalent metal cation of the group consisting of Al, Fe; $A^{n-}$ is an anion having a valency comprised between 1 and 4; x and m represent positive numbers which satisfy the following expressions

$0.2 < x \leq 0.33$ and

$m > 0$.

In the general formula above, $A^n$ represents an anion selected from the group consisting of $CO_3^{2-}$, $OH^-$, $HCO^{3-}$, $ClO^{4-}$, $NO^{3-}$, $I^-$, $[Fe(CN)_6]^{4-}$, acetate, salicylate, tartrate (bivalent) and oxalate (bivalent).

The preferred hydrotalcites of the invention are those in which $A^{n-}$ is selected from $CO_3^{2-}$, $OH^-$.

The preferred empirical formulas for hydrotalcite considered for the invention are:

$$Mg_6Al_2(OH)_{16}CO_3 \cdot 4H_2O$$

$$Mg_4Al_2(OH)_{12}CO_3 \cdot 3H_2O$$

<u>Zeolites</u>

The zeolites optionally present in the compositions of the invention can be described by the general formula:

$$Mq/a[(AlO_2)_q(SiO_2)_r]\cdot wH_2O$$

in which a is the charge on the cation M,

M is an element of the alkali or alkaline-earth metal group, in particular Na, K, Mg, q is a number greater than or equal to 2,
the q/r ratio is a number greater than or equal to 0.4, being preferably a number between 0.4 and 10.5, and w is a number between 0 and 300.

The preferred zeolites, optionally present in the composition of the invention, are described in "Atlas of Zeolite Structure Types", W. M. Meier and D. H. Olson, Butterworths, 3rd Edition, 1992.

Particularly preferred are zeolites having a particle size mainly within the range from 0.5 to 10 micron.

The preferred zeolites, which are known *per se,* have an effective mean cavity diameter of 3-5 Å and can be prepared by known methods.

Also particularly preferred are zeolites of type NaA, which have an effective mean cavity diameter of 4 Å, and are hence known as 4A zeolites, indicated by the formula:

$$Na_{12}Al_{12}Si_{12}O_{48}\cdot 27H_2O.$$

Particular preference is given to those zeolites satisfying the aforestated general formula, known as X zeolites and indicated by the formula

$$(Na_2, Ca, Mg)_{29}Al_{58}Si_{134}O_{384}\cdot 240H_2O.$$

Polyols

Among the polyols, optionally present in the composition of the invention, the following are preferred: pentaerythritol, dipentaerythritol, tripentaerythritol, bistrimethylolpropane, bistrimethylolethane, trimethylolpropane, inosite, polyvinyl alcohol, sorbitol, maltite, isomaltite, lactite, licasine, mannitol, lactose, leucrose, tris(hydroxyethyl)isocyanurate, palatinite, tetramethylolcyclohexanol, tetramethylolcyclopentanol, tetramethylolcyclopyranol, glycerol, diglycerol, polyglycerol, thiodiglycerol, or 1-0-a-D-glycopyranosyl-D-mannitol dihydrate.

Most preferred among polyols are tris(hydroxyethyl)isocyanurate (THEIC), pentaerythritol, dipentaerythritol, trimethylolpropane, bistrimethylolpropane, sorbitol.

The polyols, if present, are present preferably in an amount within the range from 0.01 to 2 parts by weight, more preferably from 0.1 to 1 parts by weight, per 100 parts by weight of halogen-containing polymer.

Phosphites

The phosphites, optionally present in the composition of the invention, are preferably organic phosphites of general formula $P(OR)_3$, in which the radicals R are identical or different and can be $C_6$-$C_{18}$ alkyl, $C_6$-$C_{18}$ alkenyl, $C_5$-$C_7$ cycloalkyl. Also included as preferred in the invention are acid phosphites of general formula $P(OH)R_2$, in which the radicals R are identical or different and selected from $C_6$-$C_{18}$ alkyl, $C_6$-$C_{18}$ alkenyl, phenyl, mono- or di-alkylphenyl, or $C_5$-$C_7$ cycloalkyl. Phosphites with the following general formula can also be present in the composition of the invention:

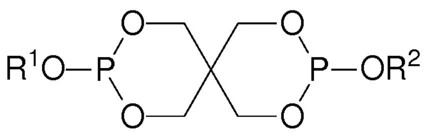

in which $R^1$ and $R^2$ are identical or different and are $C_6$-$C_{18}$ alkyl, $C_6$-$C_{18}$ alkenyl, phenyl, mono- or di-alkylphenyl, or $C_5$-$C_7$ cycloalkyl. Preferred of these latter phosphites are those in which $R^1$, $R^2$ = stearyl or

$R^1,R^2=$ 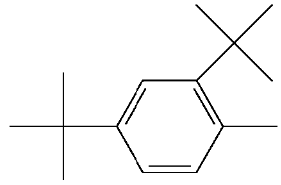

Phosphites with the following general formula can also be present:

$$(R^1O)_2\text{-PO-}R^2\text{-OP-}(OR^3)_2$$

wherein $R^1$ and $R^3$ are identical or different and are $C_6$-$C_{18}$ alkyl, $C_6$-$C_{18}$ alkenyl, phenyl, mono- or di-alkylphenyl, or $C_5$-$C_7$ cycloalkyl, $R^2$ is alkyl, alkyloxy, aryl or arylalkyl.

Each $C_6$-$C_{18}$ alkyl substituent present is, for example, n-hexyl, n-octyl, n-nonyl, decyl, dodecyl, tetradecyl, hexadecyl, octadecyl. Preferred are groups having from 8 to 18 carbon atoms.

The preferred phosphites in the present invention include:
tri(isodecyl)phosphite, tri(nonylphenyl)phosphite, tri(isotridecyl)phosphite, diphenyl isodecyl phosphite, di(isodecyl) phenyl phosphite, di(nonylphenyl) phosphite, tetraphenyl dipropyleneglycol diphosphite, 4,4' isopropylidenediphenol tetra($C_{12-15}$ alcohol) phosphite, bis(2,4-di-t-butylphenyl)pentaerythritol diphosphite, distearyl pentaerythritol diphosphite.

The phosphites, if present, are preferably in an amount within the range from 0.1 to 2 parts by weight, more preferably from 0.2 to 0.5 parts by weight, per 100 parts by weight of polymer.

The invention therefore concerns a halogenated resin comprising the composition according to the invention and a halogen-containing polymer.

The composition for stabilizing the halogen-containing polymers of the invention provides the resultant halogenated resin with excellent thermal stability properties, in particular an excellent long-term stability, and at the same time an excellent transparency and initial colour and good retention thereof in the final halogenated resin. Moreover, the composition of the invention enables the halogen-containing polymer to be stabilized even during processing steps.

The stabilized halogenated resin, preferably stabilized polyvinyl chloride (PVC), according to the present invention can be used in formulations for extrusion, injection moulding, blow moulding, calendaring, and can be formed into finished articles such as fibres, cables, ducting, engineering profiles and window profiles, pipes and connectors, film, sheets and bottles.

The resin formulation of the present invention can be advantageously used in the production of transparent and non-transparent articles.

The resin formulation of the invention can be used to obtain rigid, semi-rigid or plasticized articles. For this purpose, the halogen-containing polymer, preferably polyvinyl chloride, can receive added plasticizer substances.

Examples of preferred plasticizer substances, in the case of polyvinyl chloride, are esters of $C_4$-$C_{20}$ alcohols such as adipates, phthalates, trimellitates, azelates, sebacates, benzoates, phosphates, epoxidized compounds, such as epoxidized soya oil, polymeric plasticizers such as polyesters, polyadipates, polyphosphates and the like. The plasticizer quantity varies widely according to the final use of the plasticized resin, said quantity being preferably within the range from 5 to 120 parts by weight per 100 parts by weight of halogen-containing polymer, preferably polyvinyl chloride (PVC), more preferably from 20 to 70 parts by weight per 100 parts by weight of halogen-containing polymer, preferably PVC.

The halogenated resin according to the invention, that is to say the formulation of the invention comprising the halogen-containing polymers, in particular polyvinyl chloride (PVC) or chlorinated polyvinyl chloride (C-PVC), can also contain additives selected from the group consisting of dyes, pigments, flame retardants, internal or/and external lubricants, impact modifiers, process adjuvants, light and ultraviolet radiation stabilizers, fluorescent whitening agents, fillers, gelling agents, antistatic agents, anti-fogging agents, expanders and other additives to prevent, mask or reduce deterioration caused by heating, ageing and exposure to light. The invention is further described in the experimental section that follows. These non-limiting examples provide evidence of the benefits deriving from the stabilizer composition of the invention.

Experimental part

The polymer stabilized with the composition/product of the invention are produced and are tested according to the following methods and techniques:

- **Extrusion process:** a base polymer formulation is used for extrusion using a Krauss Maffei KMD2-25L fully instrumented conical twin-screw extruder equipped with an AISI 304 calibrator under vacuum. It operates according to the following parameters:

| Parameter | Value |
|---|---|
| Feeder speed | 4.5 rpm |
| Screw speed | 13 rpm |
| Barrel temperature - zone 1 | 165 °C |
| Barrel temperature - zone 2 | 170 °C |
| Adapter temperature | 185 °C |
| Die tool temperature | 195 °C |

- **"Red deposits":** "red deposits" appears as a stain or tiny crust on the metal of the die that was exposed to the molten PVC extrudate, once the extrusion process is completed and the die opened. These "red deposits" are the visual evidence of the corrosion of the tool and may stain the extrudate itself. "Red deposits" on die, typical of high loading of DBM, were evidenced visually on the calibrator after 600 m extrudate. This test of "red deposits" evaluation was representative of the processing of a halogen-containing polymer where the die is made of low carbon steel. "Red deposits" phenomenon extent was ranked according to these arbitrary categories:

  1: no evidence of "red deposits"; this is the best result;
  2: very slight evidence of "red deposits"; this is an acceptable result;
  3: slight evidence of "red deposits"; this is an acceptable result in most cases of demanding industrial applications;
  4: evidence of "red deposits"; this is not an acceptable result in most cases of demanding industrial applications;
  5: strong evidence of "red deposits"; this is the worst and not acceptable result in all demanding industrial applications.

- **"Red waters":** the red coloration of the water is due to the complexation of iron ions by 1,3-diketones. The resulting iron-1,3-diketonates increase the COD of the waters causing environmental concerns. Moreover, the "red water" phenomenon is a further evidence of corrosion of the iron tools. For these reasons this phenomenon is undesired. The "red water" phenomenon was simulated venting the gases evolved during a 5 min Brabender dynamic thermal stability test in 200 ml aqueous solution of 0.1% w/w ferric chloride and evaluating visually the evolution of the red color. The aforementioned dynamic thermal stability was performed with a Brabender PL2100/3 torque rheometer fitted with a W50EH roller mixer head at 180 °C, 50 rpm and 60 g sample. This test of "red waters deposits" evaluation was representative of the processing of a halogen containing polymer where venting is applied by means of liquid ring vacuum pumps made of low carbon steel. "Red waters" phenomenon extent was ranked according to these arbitrary categories:

  1: no evidence of "red waters"; this is the best result with no corrosion of the tools and the lowest COD;
  2: very slight evidence of "red waters"; this is an acceptable result, as it leads to very slight corrosion of tools and very low COD;
  3: slight evidence of "red waters"; this is an acceptable result in most cases of demanding industrial applications as it leads to slight corrosion of tools and low COD;
  4: evidence of "red waters"; this is not an acceptable result in most cases of demanding industrial applications as it leads to corrosion of tools and high COD;
  5: strong evidence of "red waters"; this is the worst and not acceptable result in all demanding industrial applications as it leads to strong corrosion of tools and very high COD.

- **Chemical oxygen demand (COD):** the chemical oxygen demand (COD) test is commonly used to indirectly measure the amount of organic compounds in water. Most applications of COD determine the amount of organic pollutants found in water, making COD a useful measure of water quality. It is expressed in milligrams per liter (mg/L), which indicates the mass of oxygen consumed per liter of solution. COD was measured by LCK 614 HACH LANGE KIT for COD using HACH LANGE DR 3800 spectrophotometer, on the colored waters obtained after the "red waters" test.
- **Short term themal stability:** short term thermal stability was evaluated in terms of initial color of the sample. Color was measured with an X-Rite model SP62. "Lab" color space is a color-opponent space with dimensions L* for lightness, and a* and b* for the color-opponent dimensions. The red/green opponent colors are represented along the a* axis, with green at negative a* values and red at positive a* values. The threshold value of $\Delta a^* \leq 6.5\%$ with respect to the state of the art (e g. comparative examples based on dibenzoylmethane in combination with metal compound in a molar ratio

"metal in metal compound" vs. dibenzoylmethane = 1:2 mol/mol) was chosen as it indicates a maximum color variation towards the red color acceptable by the most demanding industrial applications. $\Delta a^*$ is calculated as follows:

$$\Delta a^* = \frac{a^*_i - a^*_c}{a^*_c}$$

wherein:

$a^*_i$ = a* of an example of the invention;
$a^*_c$ = a* of a comparative example.

This test of thermal stability evaluation applied to either the extruded samples or the ones after the Brabender dynamic thermal stability is representative of the processing of a halogen-containing polymer.

- **Long term thermal stability:** Samples were placed in a dynamic rack of a Werner Mathis oven thermostated at 190°C and were submitted to heating. The rack moved outside the oven at a speed of 0.25 cm/minute. The time to Delta E (DE) with respect to initial color greater than 20 (darkening time) was measured. DE was evaluated with a colorimeter X-Rite model SP62. According to this rule, the lower the DE the better the long term thermal stabilization.

The threshold value of $\Delta$(Time to DE > 20) $\leq$ 8% with respect to the state of the art (e g. comparative examples based on dibenzoylmethane) was chosen as it indicates a maximum Long term thermal stability variation acceptable by the most demanding industrial applications. $\Delta$(Time to DE >20) is calculated as follows:

$$\Delta(\text{Time to DE} > 20) = \frac{|(\text{Time to DE} > 20)_i - (\text{Time to DE} > 20)_c|}{(\text{Time to DE} > 20)_c}$$

wherein:

(Time to DE >20)i = Time to DE >20 of an example of the invention;
Time to DE $>20_c$ = Time to DE >20 of a comparative example.

This test of thermal stabilization, as it was performed after the extruded samples and subsequent high temperature heating, was representative of the long term thermal stabilization of the processing of a halogen-containing polymer

- **Dispersion:** dispersion of the additives in the polymer matrix is visually assessed on the extruded samples checking the presence of inhomogeneous compositions in the form of spots. This test of thermal stability evaluation was representative of the processing of a halogen-containing polymer. Dispersion extent was ranked according to these arbitrary categories:

    - 1: no evidence of spots
    - 2: very slight evidence of spots
    - 3: slight evidence spots
    - 4: evidence spots
    - 5: strong evidence of spots

- **Long term aquatic harm assessment:** Regulation EC 1272/2008, at paragraph 4.1.3.5.5.4, indicates the rules for the assessment of aquatic toxicity of chemical mixtures. In particular, it defines the Classification criteria of a mixture for long-term hazards, based on summation of the concentrations of classified components. Aquatic long-term hazards are classified in 4 categories in decreasing degree of harm to aquatic life:

    - Catogory 1: very toxic to aquatic life with long lasting effects
    - Catogory 2: toxic to aquatic life with long lasting effects
    - Catogory 3: harmful to aquatic life with long lasting effects
    - Catogory 4: may cause long lasting harmful effects to aquatic life.

Depending on the concentration of its components and their classification, a mixture is consequently classified into one of the aforementioned categories. Among the components mentioned in the following examples, zinc oxide is the only one having a Harmonized Classification of Category 1 according to Annex VI of Regulation EC 1272/2008. If a mixture contains zinc oxide at a concentration equal to or higher than 0.25% w/w, it is classified as Category 3 (i.e. harmful to aquatic life with long lasting effects).

## EXAMPLE 1: preparation of the composition of the second embodiment of the invention

This example concerns the production of the stabilizing composition by reaction of dibenzoylmethane (component A) with $ZnO/Ca(OH)_2/Mg(OH)_2$ (component B) according to the procedure described below. Several compositions were produced, some of the invention and some not of the invention (comparative composition). The comparative compositions are identified by an asterisk (*).

Dibenzoylmethane (DBM) was loaded in an horizontal reactor and melted; the metal compound was then added gradually; a fixed amount of 56.4 g of DBM was employed for each of the tests in this series of preparations. The components were homogeneized for 15 minutes. The reaction was carried on for 1 hour at 85 °C and the reaction water removed under vacuum at 95 °C. The product was than cooled, homogeneized at room temperature for 30 minutes and ground.

Table 1 reports the amounts of reactants used in the preparation of the different compositions; in the table, M stands for the metal of component B.

Products 3, 6, 7, 12 and 13 correspond to preferred values of M:DBM ratio according to the invention.

**Table 1**

| Product | Metal compound | Amount of metal compound (g) | Extracted water (g) | Molar ratio M:DBM |
|---|---|---|---|---|
| 1* | ZnO | 10.2 | 2.27 | 1.0:2 |
| 2 | ZnO | 11.2 | 2.27 | 1.1:2 |
| 3 | ZnO | 13.2 | 2.27 | 1.3:2 |
| 4* | $Ca(OH)_2$ | 9.3 | 4.5 | 1.0:2 |
| 5 | $Ca(OH)_2$ | 10.3 | 4.5 | 1.1:2 |
| 6 | $Ca(OH)_2$ | 11.2 | 4.5 | 1.2:2 |
| 7 | $Ca(OH)_2$ | 12.1 | 4.5 | 1.3:2 |
| 8 | $Ca(OH)_2$ | 42.0 | 4.5 | 4.5:2 |
| 9* | $Ca(OH)_2$ | 51.0 | 4.5 | 5.5:2 |
| 10* | $Mg(OH)_2$ | 7.3 | 4.5 | 1.0:2 |
| 11 | $Mg(OH)_2$ | 8.0 | 4.5 | 1.1:2 |
| 12 | $Mg(OH)_2$ | 8.75 | 4.5 | 1.2:2 |
| 13 | $Mg(OH)_2$ | 9.5 | 4.5 | 1.3:2 |
| 14 | $Mg(OH)_2$ | 33.0 | 4.5 | 4.5:2 |
| 15* | $Mg(OH)_2$ | 40.0 | 4.5 | 5.5:2 |

## EXAMPLE 2: preparation of the stabilizing product of the invention

This example concerns the preferred condition of the invention, in which the composition of the second embodiment of the invention is produced in mixture with components C and D of the invention, thus giving the stabilizing product of the invention.

The procedure of Example 1 was repeated, with the difference that components C and D were added to DBM at the beginning of the preparation, and that the final cooling of the obtained composition was achieved by pouring it on a steel plaque. All these compositions had the preferred ratio Zn/DBM (mol/mol); part of the ZnO reacted with stearic acid to give zinc stearate.

Table 2 reports the amounts of reactants used in the preparation of the different products.

All the products are of the invention. In Example 19 the components were reacted together in presence of both

the most preferred ester of carboxylic acids, i.e. component C, and zinc salts of carboxylic acids, i.e. Component D (i.e. ethyleneglycol distearate and zinc stearate).

**Table 2**

| Components or reaction conditions | Stabilizing product | | | | |
|---|---|---|---|---|---|
| | 16 | 17 | 18 | 19 | 20 |
| ZnO (g) | 13.2 | 13.2 | 13.2 | 21.8 | 21.8 |
| DBM (g) | 56.4 | 56.4 | 56.4 | 56.4 | 56.4 |
| Stearic acid (g) | / | / | / | 57.5 | 57.5 |
| Ethyleneglycol distearate (g) | 171.4 | / | / | 171.4 | / |
| Hexadecyl alcohol (g) | / | 171.4 | / | / | / |
| Distearyl phthalate (g) | / | / | 171.4 | / | / |
| Extracted water (g) | 2.27 | 2.27 | 2.27 | 4.18 | 4.18 |
| Molar ratio Zn:DBM | 1.3:2 | 1.3:2 | 1.3:2 | 1.3:2 | 1.3:2 |

## EXAMPLE 3

Two different PVC formulations were prepared, for testing the stabilizing properties of the compositions of Example 1 and stabilizing products of example 2.

The two PVC formulations are identified in the following as PVC-1 and PVC-2, and were prepared (according to methods well known to the skilled person) with the following ingredients in the reported amounts:

PVC-1:

| Component | Weight (Kg) |
|---|---|
| PVC | 76.7 |
| Calcium Carbonate | 10.0 |
| Titanium dioxide | 4.0 |
| Acrylic impact modifier | 6.0 |
| Zinc stearate | 0.6 |
| Calcium stearate | 0.3 |
| [Carbonato(2-)]hexadecahydroxybis(aluminium)hexamagnesium | 0.8 |
| Tris-(2-hydroxyethyl)-isocyanurate | 0.4 |
| Octadecyl-3-(3,5-di-tert-butyl-4-hydroxyphenyl)propionate | 0.2 |
| 12-hydroxy stearic acid | 0.4 |
| Polyethylene wax | 0.1 |

PVC-2:

| Component | Weight (Kg) |
|---|---|
| PVC | 100.0 |
| Calcium Carbonate | 10.0 |
| Titanium dioxide | 4.0 |
| Acrylic impact modifier | 4.0 |
| 12-hydroxy stearic acid | 0.6 |

(continued)

| Component | Weight (Kg) |
|---|---|
| Polyethylene wax | 0.2 |
| Zinc stearate | 0.5 |
| Calcium stearate | 1.5 |

## EXAMPLE 4

The stabilizing properties of zinc-based products of the invention were tested in the halogen-containing resin PVC-1 prepared according to Example 3. In particular, it was evaluated the capability to prevent or reduce the formation of "red deposits", and the assessment of long term aquatic harm.

The tested stabilizing compositions/products were obtained by adding to the resin either components A and B of the invention separately, i.e. the compositions of the first embodiment of the invention, or as stabilizing compositions 1 to 3 of Example 1 according to the second embodiment of the invention. The resulting products are identified as resins 1 to 9; the resins containing comparative stabilizer compositions are identified by an asterisk.

The results of the tests are summarized in Table 3.

**Table 3**

| Components and tested properties | Resin no. | | | | | | | | |
|---|---|---|---|---|---|---|---|---|---|
| | 1* | 2* | 3 | 4 | 5 | 6 | 7 | 8 | 9* |
| DBM (kg) | 0.50 | / | / | / | 0.42 | 0.41 | / | 0.28 | 0.25 |
| Stab. Compos. 1* (kg) | / | 0.50 | 0.48 | / | / | / | / | / | / |
| Stab. Compos. 2 (kg) | / | / | / | / | / | / | 0.50 | / | / |
| Stab. Compos. 3 (kg) | / | / | / | 0.50 | / | / | / | / | / |
| ZnO (kg) | / | / | 0.20 | / | 0.09 | 0.09 | / | 0.22 | 0.25 |
| Molar ratio Zn:DBM | 0.0:2 | 1.0:2 | 1.3:2 | 1.3:2 | 1.3:2 | 1.2:2 | 1.1:2 | 4.5:2 | 5.5:2 |
| Stabilizing product molar ratio Zn:DBM | 0.0:2 | 1.0:2 | 1.0:2 | 1.3:2 | 0.0:2 | 0.0:2 | 1.1:2 | 0.0:2 | 0.0:2 |
| "Red deposits" rating | 5 | 4 | 3 | 1 | 3 | 3 | 2 | 2 | 2 |
| Waterlife harm rating | No | No | No | No | No | No | No | No | Yes |

From this set of experiments, it can be noted as follows:

- resin 1, using only DBM without any combination with a metal compound (comparative example), gives rise to an unacceptable red deposits rating;
- resins 2 and 9 (comparative examples) give rise to unacceptable results, either as to red deposits rating or rating of long term aquatic harm;
- resins 3 to 8 produce good results both in terms of red deposits rating and rating of long term aquatic harm. The positive effect on "red deposits" is particularly evident in resin 4, using stabilizing composition 3, where all the zinc oxide was reacted with DBM and the molar ratio Zn/DBM had the preferred value according to the invention.

## EXAMPLE 5

In the tests of this Example, the thermal stability and the "red deposit" properties of resins stabilized with calcium-containing stabilizing products (both of the invention and comparative ones) were evaluated. The base resin in this case was resin PVC-2.

The tested resins were obtained by adding to the PVC formulations the stabilizing compositions 4 to 9 of Example 1. The resulting products are identified as resins 10 to 15; the resins containing comparative stabilizer products are identified by an asterisk.

The results of the tests are summarized in Table 4.

**Table 4**

| Components and tested properties | Resin no. | | | | | |
|---|---|---|---|---|---|---|
| | 10* | 11 | 12 | 13 | 14 | 15* |
| Stab. Comp. 4* (kg) | 0.50 | / | / | / | / | / |
| Stab. Comp. 5 (kg) | / | / | / | 0.50 | / | / |
| Stab. Comp. 7(kg) | / | 0.50 | / | / | / | / |
| Stab. Comp.6 (kg) | / | / | 0.50 | / | / | / |
| Stab. Comp. 8 (kg) | / | / | / | / | 0.50 | / |
| Stab. Comp. 9* (kg) | / | / | / | / | / | 0.50 |
| Molar ratio Ca:DBM | 1.0:2 | 1.3:2 | 1.2:2 | 1.1:2 | 4.5:2 | 5.5:2 |
| Δa* vs. resin 10* | 0.0% | 0.5% | 0.5% | 0.2% | 6.5% | 8.5% |
| "Red deposits" rating | 4 | 1 | 1 | 2 | 1 | 1 |

As it is evident from the results reported in the Table, the stabilizing products of the invention improve the "red deposits" and maintain the initial color (a*) similar to that of comparative resin 10* (within a difference lower than or equal to 6.5%). Resins 11 and 12 show the best results, providing a low difference of initial color (a*) with respect to comparative resin 10 and the minimum level of "red deposits". Comparative resins, on the other hand, either gave "red deposits" at too high an extent (resin 10) or give rise to an unacceptable color difference Δa* (resin 15).

## EXAMPLE 6

The tests of Example 5 were repeated, with the only difference that in this case were evaluated the thermal stability and "red deposit" properties of resins stabilized with magnesium-containing products.

The tested resins were obtained by adding to PVC formulations the stabilizing compositions 10 to 15 of Example 1. The resulting products are identified as resins 16 to 21; the resins containing comparative stabilizer compositions are identified by an asterisk.

The results of the tests are summarized in Table 5.

**Table 5**

| Components and tested properties | Resin no. | | | | | |
|---|---|---|---|---|---|---|
| | 16* | 17 | 18 | 19 | 20 | 21 * |
| Stab. product 10* (kg) | 0.50 | / | / | / | / | / |
| Stab. product 11 (kg) | / | / | / | 0.50 | / | / |
| Stab. product 13 (kg) | / | 0.50 | / | / | / | / |
| Stab. product 12 (kg) | / | / | 0.50 | / | / | / |
| Stab. product 14 (kg) | / | / | / | / | 0.50 | / |
| Stab. product 15* (kg) | / | / | / | / | / | 0.50 |
| Molar ratio Mg:DBM | 1.0:2 | 1.3:2 | 1.2:2 | 1.1:2 | 4.5:2 | 5.5:2 |
| Δa* vs. resin 10* | 0.0% | 0.5% | 0.3% | 0.0% | 5.0% | 6.6% |
| "Red deposits" rating | 4 | 1 | 1 | 2 | 1 | 1 |

As it is evident from the results reported in the Table, the stabilizing compositions of the invention improve the "red deposits" and maintain the initial color (a*) similar to that of comparative resin 16* (within a difference lower than or equal to 6.5%). Resin 18 shows the best results, providing, a low difference of initial color (a*) with respect to comparative resin 16 and the minimum level of "red deposits". Comparative resins, on the other hand, either gave "red deposits" at too high an extent (resin 16) or give rise to an unacceptable color difference Δa* (resin 21).

**EXAMPLE 7**

In this set of experiments, it was tested the capability of zinc-based stabilizing Compositions/products of the invention of homogeneously dispersing in the halogen-containing resins, to avoid visual pitting. The capability to prevent or reduce the formation of "red deposits" was evaluated as well.
The stabilizing properties of zinc-based products of the invention were tested in the halogen-containing resin PVC-1 prepared according to Example 3.
The tested stabilizing compositions were comparative DMB and product 1 (prepared as described in Example 1) and products 16 to 20 (prepared as described in Example 2). The resulting products are identified as resins 22 to 28; the resins containing comparative stabilizer compositions are identified by an asterisk.
The results of the tests are summarized in Table 6.

Table 6

| Components and tested properties | Resin no. | | | | | | |
|---|---|---|---|---|---|---|---|
| | 22* | 23* | 24 | 25 | 26 | 27 | 28 |
| DBM (kg) | 0.5 | / | / | / | / | / | / |
| Stab. Composition 1* | / | 0.5 | / | / | / | / | / |
| Stab. product 16 | / | / | 1.77 | / | / | / | / |
| Stab. product 17 | / | / | / | 1.77 | / | / | / |
| Stab. product 18 | / | / | / | / | 1.77 | / | / |
| Stab. product 19 | / | / | / | / | / | 2.05 | / |
| Stab. product 20 | / | / | / | / | / | / | 0.89 |
| Molar ratio Zn:DBM | 0.0:2 | 1.0:2 | 1.3:2 | 1.3:2 | 1.3:2 | 1.3:2 | 1.3:2 |
| "Red deposits" rating | 5 | 4 | 1 | 1 | 1 | 1 | 1 |
| Dispersion rating | 1 | 5 | 3 | 3 | 3 | 1 | 3 |

Resins from 24 to 28 were according to the preferred embodiment of the invention, having used zinc oxide and DBM reacted into esters of carboxylic acids and/or zinc salts carboxylic acids in order to prepare the stabilizing product. In particular, resin 27 was prepared with a stabilizing composition in which the components were reacted in the presence of both the most preferred esters of carboxylic acids and zinc salts carboxylic acids (i.e. ethyleneglycol distearate and zinc stearate); this resin thus represents one of the preferred embodiments of the invention.
Resin 22 only contained DBM, without any combination with ZnO, and was thus a comparative resin.
Resin 23 is comparative in that it used a molar ratio Zn:DBM outside the range of the invention.
As it is evident from the results summarized in Table 6, the resins of the invention show good results both in terms of red deposits rating and dispersibility, contrary to comparative examples. It is also evident that resin 27, containing the stabilizing product prepared according to the most preferred conditions of the invention, gives rise to a reaction environment capable to provide a well dispersible product and no pitting at all.

**EXAMPLE 8**

In the experiments of this Example, the thermal stability and "red waters" properties of resins stabilized with a zinc-containing composition of the invention were evaluated; the tested composition is stabilizing product 19, representative of one of the preferred embodiments of the invention. For comparison purposes, the same features were evaluated on a resin stabilized with calcium acetylacetonate, as known from the prior art. The base resin in these tests was resin PVC-1.
The compositions of the two resins and the results of the tests are summarized in Table 7.

**Table 7**

| Components and tested properties | Resin no. | |
|---|---|---|
| | 29* | 30 |
| Ca acetylacetonate (kg) | 0.15 | / |
| Stab. product 19 (Kg) | / | 2.05 |
| Molar ratio Zn:DBM | / | 1.30:2 |
| "Red waters" rating | 5 | 1 |
| COD (mg/L) | 152 | <45 |

It was evident that resin 30, stabilized with the product according to the invention, provides minimum "red waters" and COD compared to prior art resin 29, using the "standard" additive calcium acetylacetonate which gives rise to strong red coloration to waters and very high COD.

## EXAMPLE 9

The stabilizing properties of zinc-based products of the invention were tested in the halogen-containing resin PVC-2 prepared according to Example 3. In particular, it was evaluated the capability to prevent or reduce the formation of "red deposits", and the assessment of long term thermal stability.

The tested stabilizing compositions/products were obtained by adding to the resin either components A and B of the invention separately, i.e. the compositions of the first embodiment of the invention. The resulting products are identified as resins 31 to 36; the resins containing comparative stabilizer compositions are identified by an asterisk.

The results of the tests are summarized in Table 8.

**Table 8**

| Components and tested properties | Resin no. | | | | | |
|---|---|---|---|---|---|---|
| | 31* | 32 | 33 | 34 | 35 | 36* |
| DBM (kg) | 0.200 | 0.200 | 0.200 | 0.200 | 0.200 | 0.200 |
| ZnO (kg) | / | 0.040 | 0.043 | 0.047 | 0.163 | 0.199 |
| Molar ratio Zn:DBM | 0.0:2 | 1.1:2 | 1.2:2 | 1.3:2 | 4.5:2 | 5.5:2 |
| "Red deposits" rating | 5 | 2 | 1 | 1 | 1 | 1 |
| Δ(Time to DE >20) vs. resin 31* | 0% | 2% | 2% | 2% | 7% | 9% |

From this set of experiments, it can be noted as follows:

- resin 31, using only DBM without any combination with a metal compound (comparative example), gives rise to an unacceptable red deposits rating;
- resins 36 (comparative example) give rise to unacceptable results as to Time to DE >20;
- resins 32 to 35 produce good results both in terms of red deposits rating and Time to DE >20. The positive effect on "red deposits" is particularly evident in resin 33 and 34 where the molar ratio Zn/DBM had the preferred value according to the invention.

## Claims

1. A composition for stabilizing halogen-containing polymers comprising a component A being a compound 1,3-diketone of formula (I)

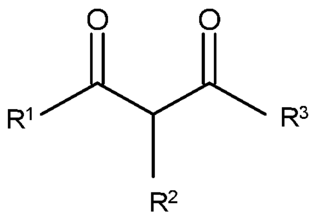

(I)

wherein:

$R^1$ and $R^3$, independently from one another, are ($C_2$-$C_{22}$) alkyl; hydroxy($C_5$-$C_{10}$) alkyl; ($C_3$-$C_7$)alkenyl; phenyl; phenyl substituted with a substituent selected from OH, ($C_1$-$C_4$)alkyl or halogen($C_1$-$C_4$)alkyl; phenyl($C_7$-$C_{10}$)alkyl; ($C_5$-$C_{12}$)cycloalkyl; ($C_5$-$C_{12}$)cycloalkyl substituted with ($C_1$-$C_4$)alkyl;
$R^2$ is selected from the group consisting of hydrogen, ($C_1$-$C_8$)alkyl, ($C_3$-$C_7$)alkenyl, ($C_2$-$C_{12}$)alkylphenyl, alkyl($C_7$-$C_{12}$)phenyl and ($C_7$-$C_{10}$)alkyl,
or its salt of a metal M selected from Zn, Mg and Ca,
and
a component B being a compound of metal M selected from the group consisting of ZnO, $Mg(OH)_2$ and $Ca(OH)_2$, wherein the compound 1,3-diketone of formula (I) is selected from the group consisting of stearoylbenzoylmethane, dehydroacetic acid (3-acetyl-2-hydroxy-6-methyl-4H-pyran-4-one) and dibenzoylmethane (DBM), and wherein the molar ratio between M and 1,3-diketone compound is in the range from 1.1:2 to 5.0:2.

**2.** The composition according to claim 1 wherein the component A is the compound 1,3-diketone of formula (I).

**3.** The composition according to claim 1 wherein the component A is the salt of the metal M selected from Zn, Mg and Ca of the compound 1,3-diketone of formula (I).

**4.** The composition according to anyone of claims 1-3, wherein the molar ratio between M and 1,3-diketone compound is in the range from 1.1:2 to 1.5:2.

**5.** The composition according to claim 4, wherein the molar ratio between M and 1,3-diketone compound is 1.3:2.

**6.** The composition according to anyone of claims 1-5, wherein the compound 1,3-diketones of formula (I) is dibenzoylmethane (DBM).

**7.** The composition according to anyone of claims 1-6, wherein the composition comprises component C, which is selected from the group consisting of ester and/or partial ester of saturated, straight-chain $C_{12}$-$C_{34}$ carboxylic acids and an (Cs-C22)alcohol.

**8.** The composition according to claim 7, wherein the component C is ethyleneglycol distearate.

**9.** The composition according to anyone of claims 1-8, wherein the composition comprises component D, which is a zinc salt of saturated, straight-chain $C_8$-$C_{22}$ carboxylic acids.

**10.** The composition according to claim 9, wherein the component D is zinc stearate.

**11.** A process for preparing the stabilizing composition claim 3, which comprises the steps of:

a) loading and melting the 1,3-diketone compound of formula (I) as defined in claim 1;
b) adding component B as defined in claim 1 to melt of step a);
d) heating the product of step b) to a temperature in the range from 70 to100 °C, thus removing water from the product.

**12.** The process according to claim 11, wherein component C, which is selected from the group consisting of ester and/or partial ester of saturated, straight-chain $C_{12}$-$C_{34}$ carboxylic acids and an ($C_8$-$C_{22}$)alcohol and component D, which is a zinc salt of saturated, straight-chain $C_8$-$C_{22}$ carboxylic acids, are added together to component B in step b).

13. A stabilizing product obtainable by the process of claim 12, having said stabilizing product a viscosity at 120°C from 3 to 100 mPas, preferably from 5 to 50 mPas and, more preferably of 7 mPas, being the viscosity of the stabilizing product measured with a viscosimeter for dynamic viscosity HAAKE RS50 Rheostress equipped with a rotor of 55 mm high and 41 mm diameter and at a speed of about 400 rpm.

14. A halogenated resin in rigid formulation comprising a halogen-containing polymer and the stabilizing composition according to any one of claims 1-10 or the stabilizing product according to claim 13.

15. A halogenated resin in plasticized or semi-rigid formulation comprising a halogen-containing polymer, at least one plasticizer substance and and the stabilizing composition according to any one of claims 1-10 or the stabilizing product according to claim 13.

16. The halogenated resin in rigid, semi-rigid or plasticized formulation according to claim 14 or 15, wherein the halogen-containing polymer is polyvinyl chloride (PVC) or chlorinated polyvinyl chloride (C-PVC).

17. The halogenated resin in rigid, semi-rigid or plasticized formulation according to any one of claims 14-16, further comprising stabilizing and co-stabilizing excipient agents selected from the group consisting of sodium, lithium, potassium, calcium, magnesium and aluminium salts of saturated $C_2$-$C_{22}$ aliphatic carboxylates, unsaturated $C_2$-$C_{22}$ aliphatic carboxylates, saturated $C_2$-$C_{22}$ aliphatic carboxylates substituted with at least one OH group, or whose chain is interrupted by at least one oxygen atom (oxyacids), cyclic or bicyclic carboxylates containing from 5 to 22 carbon atoms, phenylcarboxylates, unsubstituted or substituted with at least one OH group and/or substituted with $C_1$-$C_{16}$ alkyl, naphthylcarboxylates, unsubstituted or substituted with at least one OH group and/or substituted with $C_1$-$C_{16}$ alkyl, phenyl- ($C_1$-$C_{16}$)alkylcarboxylates, naphthyl-($C_1$-$C_{16}$)alkylcarboxylates, or phenolates, unsubstituted or substituted with $C_1$-$C_{12}$ alkyl, organotin compounds, perchlorates and perfluoroalkanesulphonates, sodium adipate, antioxidants, alkanolamines, zeolites and hydrotalcites, polyols, organic phosphites, $\beta$-aminocrotonic acid esters and organic co-stabilizers such as dihydropyridines, polydihydropyridines and uracil derivatives.

**Patentansprüche**

1. Zusammensetzung zur Stabilisierung halogenhaltiger Polymere, umfassend einen Bestandteil A, der eine 1,3-Diketon-Verbindung der Formel (I) ist,

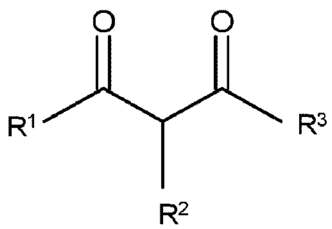

(I)

wobei:

$R^1$ und $R^3$ unabhängig voneinander sind: ($C_2$-$C_{22}$)-Alkyl; Hydroxy-($C_5$-$C_{10}$)-Alkyl; ($C_3$-$C_7$)-Alkenyl, Phenyl; Phenyl, das mit einem aus OH, ($C_1$-$C_4$)-Alkyl oder Halogen-($C_1$-$C_4$)-Alkyl ausgewählten Substituenten substituiert ist; Phenyl-($C_7$-$C_{10}$)-Alkyl; ($C_5$-$C_{12}$)-Cycloalkyl, ($C_5$-$C_{12}$)-Cycloalkyl, das mit ($C_1$-$C_4$)-Alkyl substituiert ist;
$R^2$ ausgewählt ist aus der Gruppe bestehend aus Wasserstoff, ($C_1$-$C_8$)-Alkyl, ($C_3$-$C_7$)-Alkenyl, ($C_2$-$C_{12}$)-Alkylphenyl, Alkyl-($C_7$-$C_{12}$)-Phenyl und ($C_7$-$C_{10}$)-Alkyl,
oder deren Salz eines Metalls M, das ausgewählt ist aus Zn, Mg und Ca, und
einen Bestandteil B, der eine Metallverbindung ist, die ausgewählt ist aus der Gruppe bestehend aus ZnO, $Mg(OH)_2$ und $Ca(OH)_2$,
wobei die 1,3-Diketon-Verbindung der Formel (I) ausgewählt ist aus der Gruppe bestehend aus Stearoylbenzoylmethan, Dehydracetsäure (3-Acetyl-2-hydroxy-6-methyl-4H-pyran-4-on) und Dibenzoylmethan (DBM), und wobei das Molverhältnis zwischen M und 1,3-Diketon-Verbindung im Bereich von 1,1 : 2 bis 5,0 : 2 liegt.

**2.** Zusammensetzung nach Anspruch 1, wobei der Bestandteil A die 1,3-Diketon-Verbindung der Formel (I) ist.

**3.** Zusammensetzung nach Anspruch 1, wobei der Bestandteil A das Salz des aus Zn, Mg und Ca ausgewählten Metalls M der 1,3-Diketon-Verbindung der Formel (I) ist.

**4.** Zusammensetzung nach einem der Ansprüche 1 bis 3, wobei das Molverhältnis zwischen M und 1,3-Diketon-Verbindung im Bereich von 1,1 : 2 bis 1,5 : 2 liegt.

**5.** Zusammensetzung nach Anspruch 4, wobei das Molverhältnis zwischen M und 1,3-Diketon-Verbindung 1,3 : 2 beträgt.

**6.** Zusammensetzung nach einem der Ansprüche 1 bis 5, wobei die 1,3-Diketon-Verbindung der Formel (I) Dibenzoylmethan (DBM) ist.

**7.** Zusammensetzung nach einem der Ansprüche 1 bis 6, wobei die Zusammensetzung einen Bestandteil C umfasst, der ausgewählt ist aus der Gruppe bestehend aus Estern und/oder Partialestern gesättigter, geradkettiger $C_{12}$-$C_{34}$-Carbonsäuren und eines ($C_8$-$C_{22}$)-Alkohols.

**8.** Zusammensetzung nach Anspruch 7, wobei der Bestandteil C Ethylenglykoldistearat ist.

**9.** Zusammensetzung nach einem der Ansprüche 1 bis 8, wobei die Zusammensetzung einen Bestandteil D umfasst, der ein Zinksalz gesättigter, geradkettiger $C_8$-$C_{22}$-Carbonsäuren ist.

**10.** Zusammensetzung nach Anspruch 9, wobei der Bestandteil D Zinkstearat ist.

**11.** Verfahren zur Herstellung der stabilisierenden Zusammensetzung nach Anspruch 3, welches die Schritte umfasst:

a) Vorlegen und Schmelzen der 1,3-Diketon-Verbindung der Formel (I), wie in Anspruch 1 definiert;
b) Zugeben des Bestandteils B, wie in Anspruch 1 definiert, zur Schmelze aus Schritt a);
d) Erhitzen des Produkts aus Schritt b) auf eine Temperatur im Bereich von 70 bis 100°C und somit Entfernen von Wasser aus dem Produkt.

**12.** Verfahren nach Anspruch 11, wobei der Bestandteil C, der ausgewählt ist aus der Gruppe bestehend aus Estern und/oder Partialestern gesättigter, geradkettiger $C_{12}$-$C_{34}$-Carbonsäuren und eines ($C_8$-$C_{22}$)-Alkohols und der Bestandteil D, der ein Zinksalz gesättigter, geradkettiger $C_8$-$C_{22}$-Carbonsäuren ist, in Schritt b) zusammen zum Bestandteil B gegeben werden.

**13.** Stabilisierendes Produkt, erhältlich durch das Verfahren nach Anspruch 12, wobei das stabilisierende Produkt bei 120°C eine Viskosität von 3 bis 100 mPa·s, bevorzugt von 5 bis 50 mPa·s und bevorzugter von 7 mPa·s aufweist, wobei die Viskosität des stabilisierenden Produkts mit einem Viskosimeter für dynamische Viskosität HAAKE RS50 Rheostress, das mit einem Rotor von 55 mm Höhe und 41 mm Durchmesser ausgestattet ist, und bei einer Geschwindigkeit von etwa 400 U/min gemessen ist.

**14.** Halogeniertes Harz in starrer Formulierung, umfassend ein halogenhaltiges Polymer und die stabilisierende Zusammensetzung nach einem der Ansprüche 1 bis 10 oder das stabilisierende Produkt nach Anspruch 13.

**15.** Halogeniertes Harz in weichgemachter oder halbstarrer Formulierung, umfassend ein halogenhaltiges Polymer, mindestens eine Weichmacher-Substanz und die stabilisierende Zusammensetzung nach einem der Ansprüche 1 bis 10 oder das stabilisierende Produkt nach Anspruch 13.

**16.** Halogeniertes Harz in starrer, halbstarrer oder weichgemachter Formulierung nach Anspruch 14 oder 15, wobei das halogenhaltige Polymer Polyvinylchlorid (PVC) oder chloriertes Polyvinylchlorid (C-PVC) ist.

**17.** Halogeniertes Harz in starrer, halbstarrer oder weichgemachter Formulierung nach einem der Ansprüche 14 bis 16, zudem umfassend stabilisierende und co-stabilisierende Hilfsstoffe, die ausgewählt sind aus der Gruppe bestehend aus Natrium-, Lithium-, Kalium-, Calcium-, Magnesium- und Aluminiumsalzen gesättigter aliphatischer $C_2$-$C_{22}$-Carboxylate, ungesättigter aliphatischer $C_2$-$C_{22}$-Carboxylate, gesättigter aliphatischer $C_2$-$C_{22}$-Carboxylate, die mit mindestens einer OH-Gruppe substituiert sind, oder deren Kette durch mindestens ein Sauerstoffatom unterbrochen

ist (Oxysäuren), zyklischen oder bizyklischen Carboxylaten, die 5 bis 22 Kohlenstoffatome enthalten, Phenylcarboxylaten, die unsubstituiert oder mit mindestens einer OH-Gruppe substituiert und/oder mit $C_1$-$C_{16}$-Alkyl substituiert sind, Naphthylcarboxylaten, die unsubstituiert oder mit mindestens einer OH-Gruppe substituiert und/oder mit $C_1$-$C_{16}$-Alkyl substituiert sind, Phenyl-($C_1$-$C_{16}$)-Alkylcarboxylaten, Naphthyl-($C_1$-$C_{16}$)-Alkylcarboxylaten, oder Phenolaten, die unsubstituiert oder mit $C_1$-$C_{12}$-Alkyl substituiert sind, zinnorganischen Verbindungen, Perchloraten und Perfluoralkansulfonaten, Natriumadipat, Antioxidantien, Alkanolaminen, Zeolithen und Hydrotalkiten, Polyolen, organischen Phosphiten, β-Aminocrotonsäureestern und organischen Co-Stabilisatoren wie Dihydropyridinen, Polydihydropyridinen und Uracilderivaten.

## Revendications

1. Composition pour stabiliser des polymères contenant halogènes, comprenant un composant A qui est un composé 1,3-dicétone de formule (I)

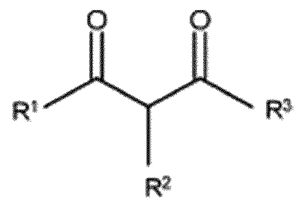

(I)

dans laquelle :

$R^1$ et $R^3$, indépendamment l'un de l'autre, sont un ($C_2$-$C_{22}$) alkyle ; hydroxy($C_5$-$C_{10}$)alkyle ; ($C_3$-$C_7$)alcényle ; phényle ; phényle substitué avec un substituant choisi parmi OH, ($C_1$-$C_4$)alkyle ou halogéno($C_1$-$C_4$)alkyle ; phényl($C_7$-$C_{10}$)alkyle ; ($C_5$-$C_{12}$)cycloalkyle ; ($C_5$-$C_{12}$)cycloalkyle substitué avec ($C_1$-$C_4$)alkyle ;
$R^2$ est choisi parmi le groupe constitué par l'hydrogène, ($C_1$-$C_8$)alkyle, ($C_3$-$C_7$)alcényle, ($C_2$-$C_{12}$)alkylphényle, alkyl($C_7$-$C_{12}$)phényle et ($C_7$-$C_{10}$)alkyle,
ou son sel d'un métal M choisi parmi Zn, Mg et Ca,
et
un composant B qui est un composé de métal M choisi parmi le groupe constitué par ZnO, $Mg(OH)_2$ et $Ca(OH)_2$, dans laquelle le composé 1,3-dicétone de formule (I) est choisi parmi le groupe constitué par le stéaroylbenzoylméthane, l'acide déhydroacétique (3-acétyl-2-hydroxy-6-méthyl-4H-pyran-4-one) et le dibenzoylméthane (DBM), et
dans laquelle le rapport molaire entre M et le composé 1,3-dicétone est dans la gamme de 1,1:2 à 5,0:2.

2. Composition selon la revendication 1, dans laquelle le composant A est le composé 1,3-dicétone de formule (I).

3. Composition selon la revendication 1 dans laquelle le composant A est le sel du métal M choisi parmi Zn, Mg et Ca du composé 1,3-dicétone de formule (I).

4. Composition selon l'une quelconque des revendications 1-3, dans laquelle le rapport molaire entre M et le composé 1,3-dicétone est dans la gamme de 1,1:2 à 1,5:2.

5. Composition selon la revendication 4, dans laquelle le rapport molaire entre M et le composé 1,3-dicétone est de 1,3:2.

6. Composition selon l'une quelconque des revendications 1-5, dans laquelle le composé 1,3-dicétone de formule (I) est le dibenzoylméthane (DBM).

7. Composition selon l'une quelconque des revendications 1-6, dans laquelle la composition comprend un composant C, qui est choisi parmi le groupe constitué par un ester et/ou un ester partiel d'acides carboxyliques en C12-C34 saturés à chaîne linéaire et un ($C_8$-$C_{22}$)alcool.

8. Composition selon la revendication 7, dans laquelle le composant C est le distéarate d'éthylèneglycol.

**9.** Composition selon l'une quelconque des revendications 1-8, dans laquelle la composition comprend un composant D, qui est un sel de zinc d'acides carboxyliques en $C_8$-$C_{22}$ saturés à chaîne linéaire.

**10.** Composition selon la revendication 9, dans laquelle le composant D est le stéarate de zinc.

**11.** Procédé de préparation de la composition stabilisante selon la revendication 3, qui comprend les étapes de :

a) charger et fondre le composé 1,3-dicétone de formule (I) tel que défini dans la revendication 1 ;
b) ajouter un composant B tel que défini dans la revendication 1 à la masse fondue de l'étape a) ;
d) chauffer le produit de l'étape b) à une température dans la gamme de 70 à 100 °C, éliminant ainsi l'eau du produit.

**12.** Procédé selon la revendication 11, dans lequel un composant C, qui est choisi parmi le groupe constitué par un ester et/ou un ester partiel d'acides carboxyliques en $C_{12}$-$C_{34}$ saturés à chaîne linéaire et un ($C_8$-$C_{22}$)alcool, et un composant D, qui est un sel de zinc d'acides carboxyliques en $C_8$-$C_{22}$ saturés à chaîne linéaire, sont ajoutés ensemble au composant B à l'étape b).

**13.** Produit stabilisant pouvant être obtenu par le procédé de la revendication 12, ledit produit stabilisant ayant une viscosité à 120 °C de 3 à 100 mPas, de préférence de 5 à 50 mPas, et plus préférablement de 7 mPas, la viscosité du produit stabilisant étant mesurée avec un viscosimètre pour viscosité dynamique HAAKE RS50 Rheostress équipé d'un rotor de 55 mm de haut et 41 mm de diamètre et à une vitesse d'environ 400 tr/min.

**14.** Résine halogénée en formulation rigide comprenant un polymère contenant halogènes et la composition stabilisante selon l'une quelconque des revendications 1-10 ou le produit stabilisant selon la revendication 13.

**15.** Résine halogénée en formulation plastifiée ou semi-rigide comprenant un polymère contenant halogènes, au moins une substance plastifiante et la composition stabilisante selon l'une quelconque des revendications 1-10 ou le produit stabilisant selon la revendication 13.

**16.** Résine halogénée en formulation rigide, semi-rigide ou plastifiée selon la revendication 14 ou 15, dans laquelle le polymère contenant halogènes est le polychlorure de vinyle (PVC) ou le polychlorure de vinyle chloré (C-PVC).

**17.** Résine halogénée en formulation rigide, semi-rigide ou plastifiée selon l'une quelconque des revendications 14-16, comprenant en outre des agents excipients stabilisants et co-stabilisants choisis parmi le groupe constitué par les sels de sodium, de lithium, de potassium, de calcium, de magnésium et d'aluminium de carboxylates aliphatiques saturés en $C_2$-$C_{22}$, carboxylates aliphatiques insaturés en $C_2$-$C_{22}$, carboxylates aliphatiques saturés en $C_2$-$C_{22}$ substitués avec au moins un groupe OH, ou dont la chaîne est interrompue par au moins un atome d'oxygène (oxyacides), carboxylates cycliques ou bicycliques contenant de 5 à 22 atomes de carbone, phénylcarboxylates, non substitués ou substitués avec au moins un groupe OH et/ou substitués avec un alkyle en $C_1$-$C_{16}$, naphtylcarboxylates, non substitués ou substitués avec au moins un groupe OH et/ou substitués avec un alkyle en $C_1$-$C_{16}$, phényl-($C_1$-$C_{16}$)alkylcarboxylates, naphtyl-($C_1$-$C_{16}$)alkylcarboxylates, ou phénolates, non substitués ou substitués avec un alkyle en $C_1$-$C_{12}$, composés organostanniques, perchlorates et perfluoroalcanesulfonates, adipate de sodium, antioxydants, alcanolamines, zéolites et hydrotalcites, polyols, phosphites organiques, esters d'acide $\beta$-aminocrotonique et co-stabilisateurs organiques tels que les dihydropyridines, les polydihydropyridines et les dérivés d'uracile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4221687 A
- EC 12722008
- EP 1613696 A
- JP 3275570 B